Europäisches Patentamt
European Patent Office
Office européen des brevets

(19)

(11) Publication number: **0 018 999**
**A1**

# EUROPEAN PATENT APPLICATION

(12)

published in accordance with Art. 158(3) EPC

(21) Application number: **79900188.8**

(22) Date of filing: **09.02.79**

Data of the international application taken as a basis:

(86) International application number:
**PCT/JP79/00030**

(87) International publication number:
**WO79/00710**
International publication date:
**04.10.79**

(51) Int. Cl.³: **A 61 C 13/22**

(30) Priority: **20.02.78 JP 19772/78**

(43) Date of publication of application:
**26.11.80 Bulletin 80/24**

(84) Designated Contracting States:
**DE FR GB**

(71) Applicant: **TAKAHASHI, Kenryu**
**22-3, Higashitateishi 1-chome Katsushika-ku Tokyo, 124(JP)**

(72) Inventor: **TAKAHASHI, Kenryu**
**22-3, Higashitateishi 1-chome Katsushika-ku Tokyo, 124(JP)**

(74) Representative: **Dixon, Donald Cossar et al, Gee & Co. Chancery House Chancery Lane London WC2 1QU(GB)**

(54) **SHEET FOR FIXING DENTURES.**

(57) Joining sheet for fixing a denture (2) to a gingiva. This sheet is a thin sheet mainly consisting of starch and having substantially the same shape as, but being slightly larger than, a dental plate.

FIG.1

Croydon Printing Company Ltd.

EP 0 018 999 A1

- 1 -

Technical Field:

This invention relates to a sheet fixing to the gums, said sheet being mainly used for the whole base denture (full denture).

Background Art:

The full denture has such defects that it may come off during use thereof while it can be freely put on or off for cleaning and that it will give discomforts to the user because it has a denture base.

The former adhesive cream materials for a set of artificial teeth have such troubles as to coat themselves over the whole surface of the denture base so as to do so uniformly.

Disclosure of Invention:

This invention provides a fixing sheet for the artificial teeth characterizing a thin sheet which is thinly made of starch, said sheet being shaped almost samely in figure and a little more large to the base of the denture, said sheet lying all over the surface area between the denture and the gums so that the full denture can be completely prevented from coming off during use thereof and that the disconforts from the denture base can be removed as well as the much convenience can result from the above-mentioned sheet which is placed on the denture base at one touch to fix itself to the gums as it is, possibly so as to fix a set of the denture briefly and exactly; moreover with adhesion under natural state.

Brief Description of Drawings:

The drawing shows one embodiment of the fixing sheet for a set of the artificial teeth realting to the invention;

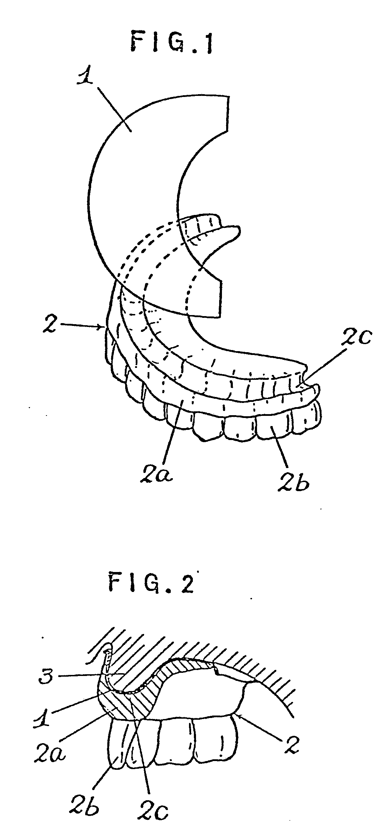

FIG. 1 is a perspective view thereof; and

FIG. 2 is a vertical section which shows an using state thereof.

Best Mode for Carrying Out the Invention:

This invention consists in a fixing sheet for a set of artificial teeth to characterize a thin sheet (1) which is mainly made of starch, said sheet being shaped almost samely in figure and a little more large to the base (2a) of the denture (2), said sheet lying all over the surface area between the denture (2) and the gingiva (3).

Besides a symbol (2b) in the drawing shows an artificial tooth.

This invention is composed as mentioned above and when the thin sheet (1) is joined onto the denture (2) to let the gingiva (3) (which is called the gums) get in a fitting groove (2c) of the denture (2) as it is, the thin sheet (1) will be dissolved in the saliva so that the denture (2) will adhere to the gingiva (3).

Accordingly the fixing operation is very brief and easy, moreover the whole surfaces between the denture (2) and the gingiva (3) being possibly adhered to maintain a natural state.

Generally the starch film cannot be dissolved in the water at a low temperature and the temperature of dissolution is 50-100°C whereas the bond of ⍺-1,4-glucoside will be hydrolyzed in the saliva by an action of the amylolytic enzyme of the amylase.

The above-mentioned thin sheet (1) can be improved of suppleness and cohesiveness by using the starch jointly with the agar or the gelatin.

- 3 -

Further a thickness of the thin sheet (1) is 0.01 - 0.05 m/m at its best.

Industrial Applicability:

The interior of the rotary-drum drier is passed through by the steam to warm up itself, its surface being thinly coated by the pasty raw material liquid which is made of the aqueous solution to use the starch, or the starch jointly with the agar or the gelatin, and being dried during rotation thereof so as to make mass production of the thin sheet as the paper roll gets loose.

The film thickness of the thin sheet can be arranged with the coating amount of the above-mentioned pasty raw material liquid.

Then the thin sheet will be cut almost samely or a little more large to the area of the denture base so as to make a product, and so on.

The usage is possibly to place this product on the surface of the denture base and to fix it to the gums at one touch.

- 4 -

Claims:

1. A fixing sheet for a set of the artifical teeth comprising a thin sheet which is mainly made of the starch, said sheet being shaped almost samely in figure and a little more large to the denture base, said sheet lying all over the surface area between the denture and the gums.

2. A fixing sheet for a set of artificial teeth as set forth in claim 1, wherein the thin sheet is made of the starch and the agar.

3. A fixing sheet for a set of artificial teeth as set forth in claim 1, wherein the thin sheet is made of the starch and the gelatin.

4. A fixing sheet for a set of artificial teeth as set forth in claim 1, wherein the thin sheet is made of the starch, the agar and the gelatin.

5. A fixing sheet for a set of artificial teeth as set forth in claim 1, wherein the thin sheet has a thickness of 0.01 - 0.05 m/m.

Claims:

1. (amended) In a thin sheet which is shaped almost samely in figure and a little more large to the denture base, said sheet lying all over the surface area between the denture and the gums; a fixing sheet for a set of the artificial teeth having said sheet mainly made of starch.

2. A fixing sheet for a set of artificial teeth as set forth in claim 1, wherein the thin sheet is made of the starch and agar.

3. A fixing sheet for a set of artificial teeth as set forth in claim 1, wherein the thin sheet is made of the starch and the gelatin.

4. A fixing sheet for a set of artificial teeth as set forth in claim 1, wherein the thin sheet is made of the starch, the agar and the gelatin.

5. A fixing sheet for a set of the artificial teeth as set forth in claim 1, wherein the thin sheet has a thickness of 0.01 - 0.05 m/m.

STATEMENT UNDER ARTICLE 19 PCT

The claim 1 is amended under the provisions of Article 19 PCT in order avoid relevancy to the following cited references which are listed in th international search report.

JP.U.53-95598.1978-8-3
JP.Y1.15-1634.1940-2-13
JP.U.52-52898.1977-4-15

Furthermore the annexed replacement sheet is made amendment as mention above.

STATEMENT UNDER ARTICLE 19 PCT

1/1

FIG.1

FIG.2

0018999

# INTERNATIONAL SEARCH REPORT

International Application No PCT/JP79/00030

**I. CLASSIFICATION OF SUBJECT MATTER (if several classification symbols apply, indicate all) 3**

According to International Patent Classification (IPC) or to both National Classification and IPC

A 61 C 13/22

**II. FIELDS SEARCHED**

| Minimum Documentation Searched 4 | |
|---|---|
| Classification System | Classification Symbols |
| I P C | 13/22 |

Documentation Searched other than Minimum Documentation
to the Extent that such Documents are Included in the Fields Searched 6

**III. DOCUMENTS CONSIDERED TO BE RELEVANT 14**

| Category * | Citation of Document, 16 with indication, where appropriate, of the relevant passages 17 | Relevant to Claim No. 18 |
|---|---|---|
| P | JP, U, 53-95598, 1978-8-3 | 1 |
| A | JP, Y1, 15-1634, 1940-2-13 | 1 |
| A | JP, U, 52-52898, 1977-4-15 | 1 |

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

**IV. CERTIFICATION**

| Date of the Actual Completion of the International Search 2 | Date of Mailing of this International Search Report 2 |
|---|---|
| 2 May 1979 (02.05.79) | 14 May 1979 (14.05.79) |
| International Searching Authority 1 | Signature of Authorized Officer 20 |
| Japanese Patent Office | |

Form PCT/ISA/210 (second sheet) (October 1977)